# FASCICULE DE BREVET EUROPEEN

(11) **EP 3 501 954 B1**
(45) Date de publication et mention de la délivrance du brevet: **12.08.2020**
(21) Numéro de dépôt: 18215272.8
(22) Date de dépôt: 21.12.2018
(51) Int. Cl.: B62D 25/20, B62D 29/04

(54) **STRUCTURE DE PLANCHER MONO-PIÈCE EN MATIÈRE COMPOSITE**
EINTEILIGE BODENSTRUKTUR AUS VERBUNDMATERIAL
SINGLE-PIECE FLOOR STRUCTURE MADE OF A COMPOSITE MATERIAL

(30) Priorité: 22.12.2017 FR 1763067
(43) Date de publication de la demande: 26.06.2019
(73) Titulaire: Compagnie Plastic Omnium, 69007 Lyon (FR)
(72) Inventeur: JUILLARD, Pierre, 69330 Meyzieu (FR); PIERROT, Frédéric, 01500 Amberieu en Bugey (FR); MASSON, Sébastien, 38460 CREMIEU (FR)
(74) Mandataire: LLR

(56) Documents cités:
- WO-A1-2008/040920
- DE-A1-102012 008 853
- DE-A1-102012 010 463
- US-A1- 2009 179 461

## Description

L'invention concerne le domaine des véhicules automobiles, et plus particulièrement la problématique de l'absorption de chocs frontaux d'un véhicule automobile.

L'invention concerne notamment un plancher avant structurel de véhicule réalisée en matière plastique et participant efficacement à l'absorption de chocs frontaux d'un véhicule automobile. Un tel plancher est connu du document DE 10 2012 010 463 A1.

On appelle plancher avant structurel de véhicule la partie du plancher comprise entre l'avant du véhicule et la première rangée de siège, cette partie comprenant les fixations de sièges avant.

Un plancher avant de véhicule automobile à usage routier classique avec un moteur à l'avant comprend généralement un tunnel longitudinal pour le passage notamment d'un tuyau d'échappement, d'un arbre de transmission et/ou de conduits. Un tel plancher de véhicule comprend des panneaux latéraux horizontaux joignant le tunnel central avec les longerons de bas de caisse.

La conception du véhicule doit satisfaire à un cahier des charges complexe incluant notamment des tests de choc. Parmi ces tests, il existe les tests de choc frontal, notamment les tests de choc frontal à haute vitesse qui correspondent à un impact frontal du véhicule contre un obstacle rigide ou déformable. Pour un choc frontal, la vitesse du véhicule est d'au moins 56km/h, avec un objectif de protection des occupants du véhicule. De tels tests impliquent une retransmission d'effort sur une portion importante de la longueur du véhicule, et incluant le plancher avant.

La déformation du véhicule engendrant des risques importants de blessures au passager, le test vise à mesurer l'amplitude de la déformation du véhicule. Il est à noter que le test relève en particulier la déformation au niveau du plancher du véhicule.

Les structures de planchers avant dans l'automobile reposent généralement sur un assemblage de pièces métalliques et/ou composites. Des exemples connus de planchers en aciers pour des véhicules automobiles requièrent l'assemblage de 5 à 10 pièces en acier, pour répondre aux fonctionnalités et aux contraintes liées à ce périmètre : nécessité d'avoir des corps creux pour tenir les efforts en cas de choc, nécessité d'offrir les surfaces d'appui et les accroches nécessaires aux équipements, nécessité de dégager des espaces nécessaires pour la bonne assise des passagers et du conducteur (espace pour les pieds, fixations de rails de sièges...), nécessité de dégager de l'espace pour permettre au conduits d'échappements de passer sous le plancher en zone centrale et pour permettre le passage des conduits d'air conditionné dans l'habitacle, etc...

Par ailleurs, les constructeurs font face à des réglementations également plus strictes au niveau de la consommation, notamment en CO₂, ce qui les pousse à réaliser des véhicules plus légers, notamment les planchers qui doivent alors aussi être plus légers et à iso-performance mécanique, en particulier sous les sollicitations d'un choc frontal.

De plus, les solutions actuelles reposant sur un ensemble de pièces (métalliques ou composites) présentent des complexités élevées d'assemblage. De nombreux postes sont nécessaires, ce qui représente un temps de procédé de fabrication élevé et un coût important. D'autre part, les solutions métalliques en particulier, du fait d'une densité de matière élevée, présente une masse importante, et donc entraîne une dégradation de la performance énergétique globale du véhicule.

L'invention a pour but de remédier à ces inconvénients en fournissant un plancher avant en matière composite réalisé par un moulage en un seul coup de presse, formant une pièce monobloc (plancher mono-pièce), et réduisant ainsi drastiquement la complexité de son assemblage sur la chaîne de production des constructeurs automobiles.

Ainsi, l'objet de l'invention concerne un plancher avant de véhicule automobile comportant un panneau principal en matière composite, comportant une face supérieure et une face inférieure, le panneau principal comprenant un bord avant destiné à être positionné vers l'avant du véhicule, et un tunnel central, dans lequel le panneau principal comporte de chaque côté du tunnel central au moins :
- un décaissé s'étendant depuis le bord avant du panneau principal jusqu'à une paroi transversale ;
- un renfort local formant une pièce monobloc avec le panneau principal apte à augmenter la rigidité du panneau principal, et constitué d'une matière composite enveloppant une âme en mousse,
le décaissé présentant une profondeur décroissante depuis le bord avant vers l'arrière du plancher, ladite profondeur devenant nulle à l'intersection entre le décaissé et la paroi transversale.

Cette stratégie de conception permet la réalisation d'une plancher avant de véhicule en une seule pièce principale composite à coûts fortement réduit (car absence d'assemblage de pièce par collage ou rivetage) qui, malgré l'absence de corps creux, est en mesure de soutenir des chocs tels que pouvant être occasionnés par un choc frontal.

Le plancher peut en outre comporter l'une ou plusieurs des caractéristiques suivantes, prises seules ou en combinaison :
- le décaissé est sensiblement parallèle au tunnel ;
- le décaissé s'étend depuis le bord avant du panneau jusqu'à un ensemble de nervures situé au niveau de la face inférieure du panneau, lesdites nervures reliant le fond du décaissé au reste du panneau ;

- le décaissé est apte à diffuser dans la matière composite des efforts transitant par un longeron en cas de choc frontal ;
- l'ensemble de nervures est situé vers le milieu du panneau dans le sens longitudinal ;
- la matière composite comporte des fibres de renfort coupées ;
- le panneau principal comporte un élément de liaison entre le plancher et le longeron, apte à distribuer à la matière composite les efforts transitant par le longeron en cas de choc frontal ;
- l'élément de liaison est un insert métallique surmoulé ;
- l'élément de liaison a une section en U apte à s'emboiter dans le longeron ;
- la section en U de l'élément de liaison forme une cuvette qui se prolonge dans le décaissé ;
- le renfort local comporte une rigidité de flexion supérieure à 1800N/mm ;
- le renfort local relie une zone d'entrée de l'effort à un bord latéral du plancher, constituant un appui et une fixation du plancher sur un longeron ;
- le renfort local est obtenu par surmoulage d'une mousse au sein du panneau principal en matière composite.

L'invention sera mieux comprise à la lecture des figures annexées, qui sont fournies à titre d'exemples et ne présentent aucun caractère limitatif, dans lesquelles :
- la figure 1 représente, vue de dessus, un plancher mono-pièce composite selon l'invention ;
- la figure 2 représente, vue de dessous, un plancher mono-pièce composite selon l'invention ;
- la figure 3 est une vue isométrique du bord avant d'un plancher et de l'interfaçage du plancher avec un longeron ;
- la figure 4 est une section X-X au niveau du décaissé, proche du bord avant, illustrant le surmoulage d'un élément de liaison formant un insert métallique surmoulé.
- la figure 5 est une vue isométrique d'un plancher mono-pièce composite selon l'invention ;

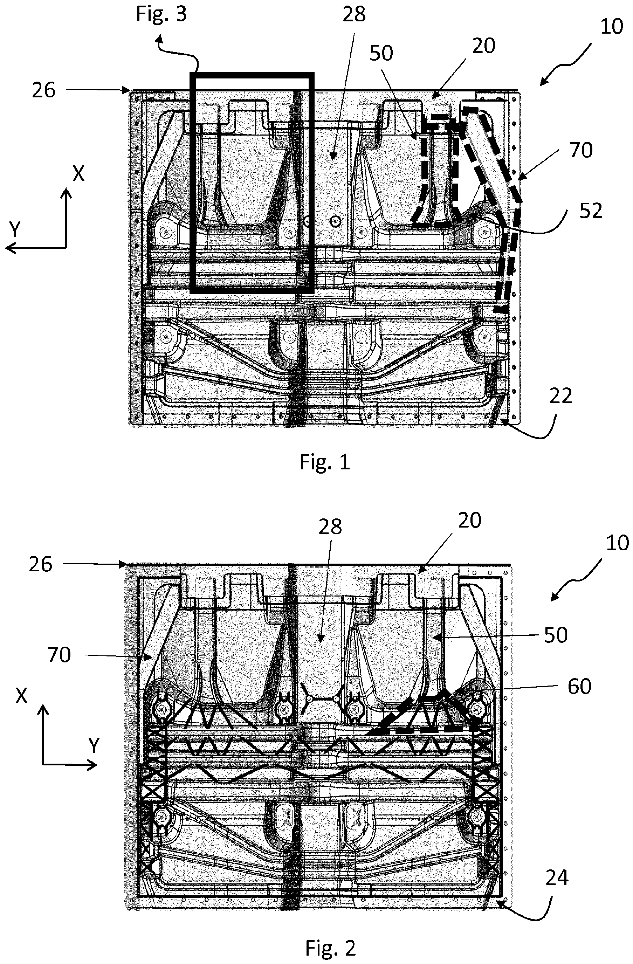

On se réfère maintenant à la figure 1 qui illustre, selon une vue de dessus, un exemple de plancher avant 10 de véhicule automobile selon l'invention, et à la figure 2 qui illustre le même plancher selon une vue de dessous.

Le plancher 10 comporte un panneau horizontal principal 20 en matière composite 30, comportant une face supérieure 22 et une face inférieure 24. Le panneau principal 20 comprend un bord avant 26 destiné à être positionné vers l'avant du véhicule, et un tunnel central 28 (sur l'axe Y0 du véhicule). Le tunnel 28 s'étend longitudinalement, c'est-à-dire parallèlement à des longerons 40 du véhicule lorsque le plancher 10 est monté sur un véhicule.

Le panneau principal 20 comporte de chaque côté du tunnel central 28 au moins :
- un décaissé 50 s'étendant depuis le bord avant 26 du panneau principal 20 jusqu'à une paroi transversale 52 ;
- un renfort local 70 formant une pièce monobloc avec le panneau principal 20 et apte à augmenter la rigidité du panneau principal 20, et constitué d'une matière composite 30 enveloppant une âme en mousse 80.

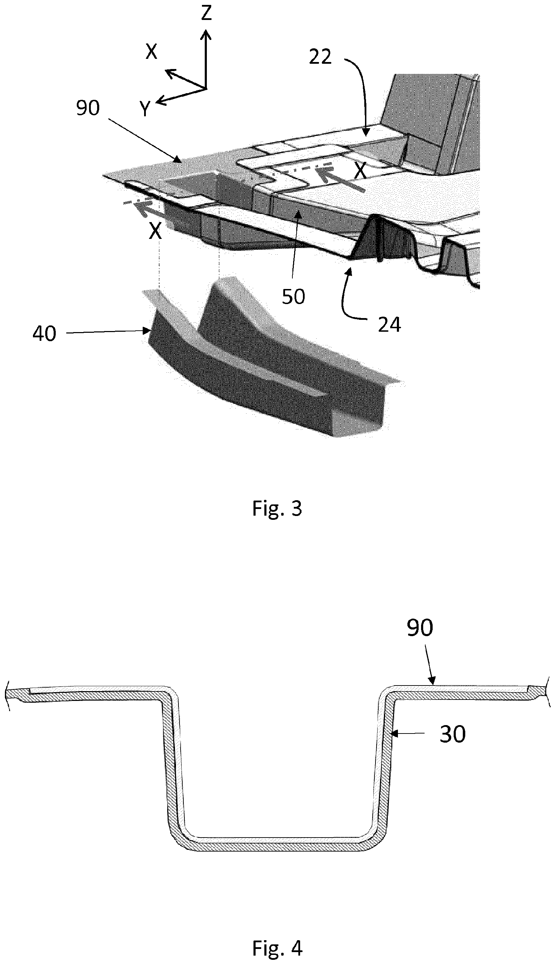

Sur la figure 1, les deux zones délimitées par des pointillés, entourent respectivement le renfort local 70 et le décaissé 50 situés du côté gauche du plancher, et la zone délimitée en trait plein indique la localisation du détail de la figure3.

On appelle décaissé, une dépression à la surface d'un élément d'allure générale plane. Ainsi le décaissé 50 constitue une dépression à la surface du plan moyen du panneau 20. Ainsi un décaissé comporte une convexité opposée à celle du tunnel.

Le décaissé 50 est apte à diffuser dans la matière composite 30 des efforts transitant par un longeron 40 en cas de choc frontal.

Le décaissé 50 peut avoir différentes formes. Selon un mode de réalisation, le décaissé 50 forme une gouttière sensiblement rectiligne et sensiblement parallèle au tunnel (28), donc aux longerons 40 du véhicule. Selon un autre mode de réalisation, le décaissé 50 a une forme courbe.

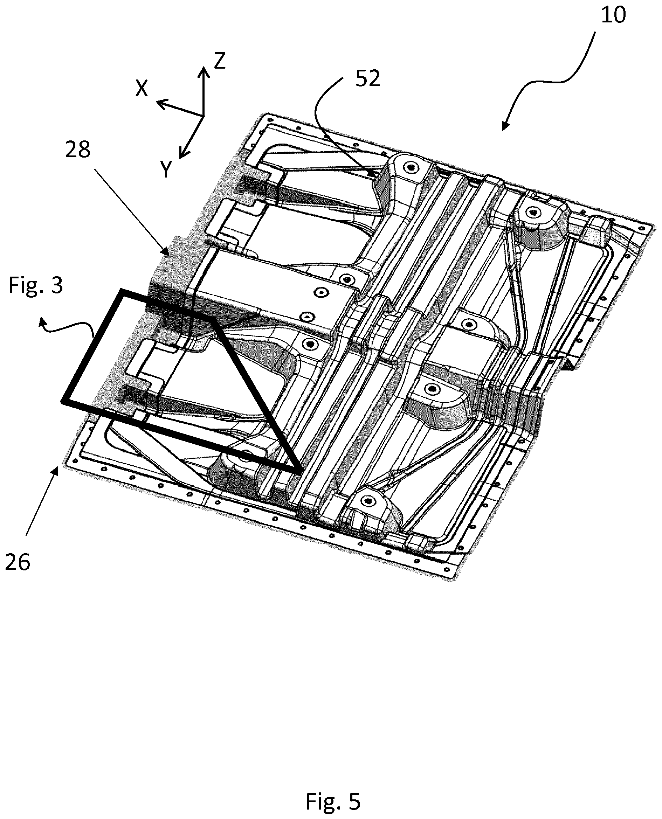

Le décaissé peut avoir une section de toute forme et avoir un profil variable ou constant. Selon un mode de réalisation avantageux, la section est en U. Selon un exemple de réalisation, illustré sur les figures 1 et 5, le décaissé 50 remonte progressivement vers l'arrière du véhicule jusqu'à avoir une profondeur nulle, c'est-à-dire que le fond du décaissé 50 remonte jusqu'à revenir à hauteur du panneau principal 20. La paroi transversale 52 est située au niveau de cette remontée au niveau du panneau 20.

Selon un exemple de réalisation, illustré sur les figures 2 et 5, le décaissé 50 s'étend depuis le bord avant 26 du panneau 20 jusqu'à un ensemble de nervures 60 situé au niveau la face inférieure 24 du panneau 20. Le décaissé 50 présente une profondeur décroissante de l'avant vers l'arrière du plancher, profondeur devenant nulle quand le décaissé rejoint la paroi transversale. Selon cet exemple, et sans être limitatif, les nervures relient le fond du décaissé 50 à la face inférieure 24 du panneau 20. De façon avantageuse, l'ensemble de nervures 60 est situé vers le milieu du panneau 20 dans le sens longitudinal du véhicule (axe X). Sur la figure 2, la zone délimitée par des pointillés, entoure un des ensembles de nervures 60.

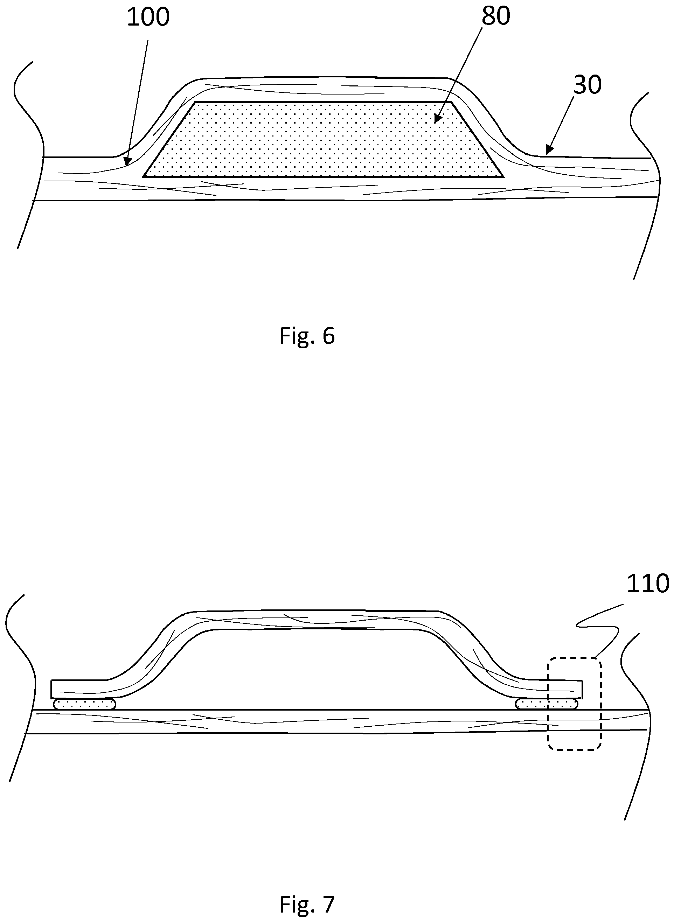

Comme l'illustre la figure 6, le renfort local 70 forme une pièce monobloc avec le panneau principal 20. Ce renfort 70 est apte à augmenter la rigidité du panneau principal 20. Il peut par exemple présenter une rigidité de flexion supérieure à 1800N/mm (mesurée suivant un essai de flexion en quatre points d'appui).

Le renfort local 70 est constitué d'une matière composite 30 enveloppant une âme en mousse 80 (voir figure 4). Cette structure dite en en sandwich, par sa grande rigidité de flexion, reprend une partie des efforts subis par le plancher 10 en cas de choc frontal.

De façon avantageuse, le renfort local 70 relie la zone d'entrée de l'effort (choc frontal) à un bord latéral du plancher, constituant un appui et une fixation du plancher (10) sur le longeron (40).

Selon un mode de réalisation préféré, le renfort local 70 est obtenu par surmoulage d'un insert constitué par un bloc de mousse 80 au sein du panneau principal 20 en matière composite, les parois de composite entourant le bloc de mousse étant appelées parements. On obtient ainsi par ce surmoulage une continuité de matière composite, et notamment dans la distribution des fibres de renforts 100, à la jonction entre les différents parements du renfort sandwich et avec le panneau 20 du plancher 10. Cette approche de réalisation permet une meilleure transmission des efforts aux jonctions des parements, par opposition à une conception classique (voir figure 7) de renforts en corps creux qui seraient réalisés par assemblage (collage et/ou rivetage) de deux parements indépendants, la discontinuité au niveau de leur zone d'assemblage constituant des zones de faiblesses 110.

Comme illustré sur la figure 6, la matière composite 30 comporte avantageusement des fibres de renfort coupées. Des fibres de renfort coupées ont une longueur inférieure à 60mm. Il peut s'agit de fibre de verre, fibre de carbone, ou tout autre type de fibre de renfort connu des spécialistes.

La figure 3 est une vue isométrique du bord avant 26 d'un plancher et de l'interfaçage du plancher avec un longeron. Cette figure illustre un mode de réalisation selon lequel, afin de résister encore davantage à un choc frontal, le décaissé 50 comporte, au niveau du bord avant 26 du panneau principal 20, un élément de liaison 90 entre le plancher 10 et le longeron 40. Cet élément de liaison 90 est de préférence un insert métallique surmoulé, et a une section en U apte à s'emboiter dans le longeron 40. La figure 4 est une section X-X au niveau du décaissé 50 (voir figure 3), proche du bord avant 26, illustrant le surmoulage d'un élément de liaison 90 formant un insert métallique surmoulé.

Selon un mode de réalisation illustré sur la figure 4, l'élément de liaison 90 présente la même forme en U que le décaissé 50.

La figure 5 est une vue isométrique d'un plancher mono-pièce composite selon l'invention.

### NOMENCLATURE

- 10: : plancher de véhicule automobile
- 20: : panneau principal horizontal en matière composite du plancher 10
- 22: : face supérieure du panneau principal 20
- 24: : face inférieure du panneau principal 20
- 26: : bord avant du panneau principal 20, destiné à être positionné vers l'avant du véhicule
- 28: : tunnel central du panneau principal 20
- 30: : matière composite
- 40: : longeron
- 50: : décaissé sensiblement parallèle au tunnel 28
- 52: : paroi transversale
- 60: : ensemble de nervures situé sur la face inférieure 24 du panneau 20
- 70: : renfort local disposé sur le panneau principal 20
- 80: : mousse du renfort local 70
- 90: : élément de liaison du panneau 20
- 100: : fibres de renfort coupées
- 110: : zones de faiblesses d'une conception classique de renforts sandwich

## Revendications

1. Plancher avant (10) de véhicule automobile comportant un panneau principal (20) en matière composite (30), comportant une face supérieure (22) et une face inférieure (24), le panneau (20) comprenant un bord avant (26) destiné à être positionné vers l'avant du véhicule, et un tunnel central (28), **caractérisé en ce que** le panneau principal (20) comporte de chaque côté du tunnel central (28) au moins :
- un décaissé (50) s'étendant depuis le bord avant (26) du panneau principal (20) jusqu'à une paroi transversale (52) ;
- un renfort local (70) formant une pièce monobloc avec le panneau principal (20) apte à augmenter la rigidité du panneau principal (20), et constitué d'une matière composite (30) enveloppant une âme en mousse (80),
le décaissé (50) présentant une profondeur décroissante depuis le bord avant (26) vers l'arrière du plancher (10), ladite profondeur devenant nulle à l'intersection entre le décaissé (50) et la paroi transversale (52).

2. Plancher (10) selon la revendication précédente, dans lequel le décaissé (50) est sensiblement parallèle au tunnel (28).

3. Plancher (10) selon l'une des revendications précédentes, dans lequel le décaissé (50) s'étend depuis le bord avant (26) du panneau (20) jusqu'à un ensemble de nervures (60) situé au niveau de la face inférieure (24) du panneau (20), lesdites nervures reliant le fond du décaissé (50) au reste du panneau (20).

4. Plancher (10) selon la revendication précédente, dans lequel le décaissé (50) est apte à diffuser dans la matière composite (30) des efforts transitant par un longeron (40) en cas de choc frontal.

5. Plancher (10) selon l'une des revendications précédentes, dans lequel l'ensemble de nervures (60) est situé vers le milieu du panneau (20) dans le sens longitudinal.

6. Plancher (10) selon l'une des revendications précédentes, dans lequel la matière composite (30) comporte des fibres de renfort coupées.

7. Plancher (10) selon l'une des revendications précédentes, dans lequel le panneau principal (20) comporte un élément de liaison (90) entre le plancher (10) et le longeron (40), apte à distribuer à la matière composite (30) les efforts transitant par le longeron (40) en cas de choc frontal.

8. Plancher (10) selon la revendication 4, dans lequel l'élément de liaison (90) est un insert métallique surmoulé.

9. Plancher (10) selon l'une des revendications 4 et 5, dans lequel l'élément de liaison (90) a une section en U apte à s'emboiter dans le longeron (40).

10. Plancher (10) selon l'une des revendications 4 à 6, dans lequel la section en U de l'élément de liaison (90) forme une cuvette qui se prolonge dans le décaissé (50).

11. Plancher (10) selon l'une des revendications précédentes, dans lequel le renfort local (70) comporte une rigidité de flexion supérieure à 1800N/mm.

12. Plancher (10) selon l'une des revendications précédentes, dans lequel le renfort local (70) relie une zone d'entrée de l'effort à un bord latéral du plancher, constituant un appui et une fixation du plancher (10) sur un longeron (40).

13. Plancher (10) selon l'une des revendications précédentes, dans lequel le renfort local (70) est obtenu par surmoulage d'une mousse (80) au sein du panneau principal (20) en matière composite.

## Patentansprüche

1. Vorderer Boden (10) eines Kraftfahrzeugs mit einer Hauptplatte (20) aus Verbundmaterial (30), die eine Oberseite (22) und eine Unterseite (24) aufweist, wobei die Platte (20) eine Vorderkante (26), aufweist, die dazu eingerichtet ist, zur Vorderseite des Fahrzeugs hin positioniert zu werden, und einen zentralen Tunnel (28) aufweist, **dadurch gekennzeichnet, dass** die Hauptplatte (20) auf jeder Seite des zentralen Tunnels (28) mindestens Folgendes aufweist:
eine Aussparung (50), die sich von der Vorderkante (26) der Hauptplatte (20) bis zu einer Querwand (52) erstreckt;
eine lokale Verstärkung (70), die ein einteiliges Stück mit der Hauptplatte (20) bildet, die eingerichtet ist, die Steifigkeit der Hauptplatte (20) zu erhöhen, und die aus einem Verbundmaterial (30) besteht, das einen Schaumstoffkern (80) umhüllt, wobei die Aussparung (50) eine Tiefe aufweist, die von der Vorderkante (26) zur Rückseite des Bodens (10) hin abnimmt, wobei diese Tiefe am Schnittpunkt zwischen der Aussparung (50) und der Querwand (52) Null wird.

2. Boden (10) gemäß dem vorstehenden Anspruch, bei dem die Aussparung (50) im Wesentlichen parallel zum Tunnel (28) verläuft.

3. Boden (10) nach einem der vorstehenden Ansprüche, wobei sich die Aussparung (50) von der Vorderkante (26) der Platte (20) zu einem Satz Rippen (60) erstreckt, die an der Unterseite (24) der Platte (20) angeordnet sind, wobei die Rippen den Boden der Aussparung (50) mit dem Rest der Platte (20) verbinden.

4. Boden (10) nach dem vorstehenden Anspruch, bei dem die Aussparung (50) in der Lage ist, im Falle eines Frontalaufpralls durch einen Holm (40) hindurchgehende Kräfte in das Verbundmaterial (30) zu diffundieren.

5. Boden (10) nach einem der vorstehenden Ansprüche, bei dem der Satz Rippen (60) in Längsrichtung zur Mitte der Platte (20) hin angeordnet ist.

6. Boden (10) nach einem der vorstehenden Ansprüche, bei dem das Verbundmaterial (30) geschnittene Verstärkungsfasern enthält.

7. Boden (10) nach einem der vorstehenden Ansprüche, bei dem die Hauptplatte (20) ein Verbindungselement (90) zwischen dem Boden (10) und dem Holm (40) aufweist, das eingerichtet ist, die Kräfte, die bei einem Frontalaufprall durch den Holm (40) hindurchgehen, auf das Verbundmaterial (30) zu verteilen.

8. Boden (10) nach Anspruch 4, wobei das Verbindungselement (90) ein umspritzter Metalleinsatz ist.

9. Boden (10) nach einem der Ansprüche 4 und 5, wobei das Verbindungselement (90) einen U-förmigen Querschnitt aufweist, der zum Einpassen in den Holm (40) eingerichtet ist.

10. Boden (10) nach einem der Ansprüche 4 bis 6, wobei der U-förmige Querschnitt des Verbindungselementes (90) eine Rinne bildet, die sich in die Aussparung (50) erstreckt.

11. Boden (10) nach einem der vorhergehenden Ansprüche, bei dem die lokale Verstärkung (70) eine Biegesteifigkeit von mehr als 1800N/mm aufweist.

12. Boden (10) nach einem der vorhergehenden Ansprüche, bei dem die lokale Verstärkung (70) einen Krafteintrittsbereich mit einer Seitenkante des Bodens verbindet und eine Stütze und eine Befestigung des Bodens (10) an einem Holm (40) bildet.

13. Boden (10) nach einem der vorstehenden Ansprüche, bei dem die lokale Verstärkung (70) durch Umspritzen eines Schaums (80) innerhalb der Hauptplatte (20) aus Verbundmaterial erhalten wird.

## Claims

1. Motor vehicle front floor (10) comprising a main panel (20) made from composite material (30) having a top face (22) and a bottom face (24), the panel (20) comprising a front edge (26) intended to be positioned towards the front of the vehicle and a central tunnel (28), **characterised in that** the main panel (20) comprises on each side of the central tunnel (28) at least:
- one recess (50) extending from the front edge (26) of the main panel (20) to a transverse wall (52);
- one local reinforcement (70) forming a monobloc piece with the main panel (20) intended to increase the stiffness of the main panel (20) and made from a composite material (30) encasing a foam core (80),
the recess (50) having a decreasing depth from the front edge (26) towards the rear of the floor (10), said depth becoming zero at the intersection between the recess (50) and the transverse wall (52).

2. Floor (10) as claimed in the preceding claim, wherein the recess (50) is substantially parallel with the tunnel (28).

3. Floor (10) as claimed in one of the preceding claims, wherein the recess (50) extends from the front edge (26) of the panel (20) to a set of ribs (60) located at the level of the bottom face (24) of the panel (20), said ribs linking the base of the recess (50) to the rest of the panel (20).

4. Floor (10) as claimed in the preceding claim, wherein the recess (50) is capable of diffusing into the composite material (30) forces passing through a side rail (40) in the event of frontal impact.

5. Floor (10) as claimed in one of the preceding claims, wherein the set of ribs (60) is located towards the middle of the panel (20) in the longitudinal direction.

6. Floor (10) as claimed in one of the preceding claims, wherein the composite material (30) comprises chopped reinforcing fibres.

7. Floor (10) as claimed in one of the preceding claims, wherein the main panel (20) comprises a connecting element (90) between the floor (10) and the side rail (40) capable of distributing through the composite material (30) the forces passing through the side rail (40) in the event of frontal impact.

8. Floor (10) as claimed in claim 4, wherein the connecting element (90) is an overmoulded metal insert.

9. Floor (10) as claimed in one of claims 4 and 5, wherein the connecting element (90) has a U-shaped cross-section intended to fit in the side rail (40).

10. Floor (10) as claimed in one of claims 4 to 6, wherein the U-shaped cross-section of the connecting element (90) forms a well which extends into the recess (50).

11. Floor (10) as claimed in one of the preceding claims, wherein the local reinforcement (70) has a bending stiffness greater than 1800N/mm.

12. Floor (10) as claimed in one of the preceding claims, wherein the local reinforcement (70) connects a force entry zone to a lateral edge of the floor constituting a support and a fixing means of the floor (10) on a side rail (40).

13. Floor (10) as claimed in one of the preceding claims, wherein the local reinforcement (70) is made by overmoulding a foam (80) within the main panel (20) of composite material.
